(19) Europäisches Patentamt
European Patent Office
Office européen des brevets

(11) **EP 1 598 240 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(51) Int Cl.:
***B60R 11/02*** *(2006.01)*

(21) Anmeldenummer: **05011100.4**

(22) Anmeldetag: **23.05.2005**

(54) **Ausklappbarer Monitor**

Foldable video display

Ecran pliant

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **21.05.2004 DE 102004024996**

(43) Veröffentlichungstag der Anmeldung:
**23.11.2005 Patentblatt 2005/47**

(73) Patentinhaber: **ROBERT BOSCH GMBH**
**70442 Stuttgart (DE)**

(72) Erfinder: **Roehl, Martin**
**31139 Hildesheim (DE)**

(56) Entgegenhaltungen:
**DE-A1- 10 338 304**       **US-A1- 2004 075 639**

EP 1 598 240 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

*Technisches Gebiet*

Die Erfindung betrifft einen ausklappbarer Monitor, insbesondere für ein Kraftfahrzeug, mit einer Antriebseinheit, mit der der Monitor um eine Drehachse aus einer im Wesentlichen horizontalen Nichtgebrauchslage in eine im Wesentlichen vertikale Gebrauchlage und umgekehrt schwenkbar ist.

*Stand der Technik*

Aus der DE 43 09 151 A1 ist ein Monitor für den Einsatz in einem Autobus bekannt, bestehend aus einem Gehäuse, einer Bildröhre und zwei Leisten oder Vorsprüngen, die in korrespondierende Leisten oder Vorsprünge unter dem Himmel des Autobusses eingeschoben und durch eine Sicherung in ihre Stellung einer gegenseitigen Verhakung gehalten werden. Einer der Nachteile ist, dass der Monitor fest am Autobusbimmel befestigt ist und somit viel Bauraum innerhalb des Busses benötigt, auch wenn der Monitor nicht aktiviert ist.

Des Weiteren ist es allgemein bekannt, in Kraftfahrzeugen, beispielsweise in Reisebussen, Videoanlagen mit einer Vielzahl an Monitoren auszustatten. An den Monitoren ist eine Schwenkvorrichtung befestigt, wodurch die Monitore aus einer Vertiefung des Reisebusdaches automatisch in eine Gebrauchslage ausgeklappt und in eine Nichtgebrauchslage wieder zurück in ihre Position eingeklappt werden können. Hierbei befindet sich die Drehachse im oberen Bereich des Monitors. Beim Schwenkvorgang ist jedoch nachteiligerweise ein hohes Drehmoment erforderlich, da der Monitor ein relativ hohes Gewicht aufweist. Dementsprechend ist eine starke Antriebseinheit notwendig, die eine Schwenkbewegung des Monitors zuverlässig ausführen kann. Auch zum Halten des Monitors in eingeklappter Position (Ruhelage) muss die Antriebseinheit eine entsprechende Kraft beziehungsweise ein Drehmoment auf den Monitor ausüben, da in dieser Lage das durch die Schwerkraft wirkende Moment (Schwerkraftmoment) am größten ist.

Die US 2004/0075639 A1 offenbart einen Schwenkmonitor, der ebenfalls elektromotorisch angetrieben wird, wobei beim Ausschwenken des Monitors der Antrieb einer Gasdruckfeder entgegenwirkt, die durch das Ausschwenken in die Gebrauchslage des Monitors vorgespannt wird. Die Feder hat die Aufgabe, den Monitor in die Nichtgebrauchslage zurückzuschwenken,

**Darstellung der Erfindung, Aufgabe, Lösung, Vorteile**

Es ist Aufgabe der vorliegenden Erfindung einen ausklappbaren Monitor zu schaffen, welcher die oben genannten Nachteile vermeidet, insbesondere ein einfacher und kostengünstiger Monitor zur Verfügung gestellt wird, der durch eine kleine und kompakte Antriebseinheit verschwenkbar ist.

Zur Lösung dieser Aufgabe wird ein ausklappbarer Monitor mit den Merkmalen des Anspruches 1 vorgeschlagen. In den abhängigen Ansprüchen sind bevorzugte Weiterbildungen ausgeführt.

Dazu ist erfindungsgemäß vorgesehen, dass der Monitor ein Feder-Hebel-System umfasst, das im Wesentlichen ein Moment auf den Monitor ausübt, das in jeder Lage des Monitors entgegengesetzt dem aufgrund der Masse des Monitors wirkenden Schwerkraftmoment nahezu entspricht. Das erfindungsgemäße Feder-Hebel-System ist derart mit dem Monitor in Wirkverbindung, dass das Drehmoment, das durch die Schwerkraft entsteht, in jeder Lage des Monitors weitestgehend aufgehoben ist. Das Schwerkraftmoment lässt sich hierbei durch folgende mechanische Gleichung ermitteln:

$$M_S = \cos(\alpha)\ L\ m$$

Hierbei entspricht m der Monitormasse, L dem Abstand zwischen der Drehachse und dem Monitorschwerpunkt, und a dem Schwenkwinkel des Monitors um die Drehachse (0° = Monitor in Nichtgebrauchslage; 90° = Monitor in Gebrauchslage).

Das Feder-Hebel-System erzeugt ein Drehmoment, das dem Schwerkraftmoment entgegengesetzt ist, wobei beide Drehmomente nahezu den gleichen Betrag aufweisen. Erfindungsgemäß ist das Feder-Hebel-System so ausgebildet, dass in jeder Schwenkposition ein entsprechend entgegengerichtetes Drehmoment auf den Monitor einwirkt, so dass das Schwerkraftmoment in jeder Schwenkwinkellage a weistestgehend aufgehoben wird. Eine derartige Ausgestaltung des ausklappbaren Monitors hat den wesentlichen Vorteil, dass nur eine sehr geringe Kraft beziehungsweise ein geringes Drehmoment von der Antriebseinheit während des Schwenkvorganges des Monitors ausgeübt werden muss. Folglich kann eine leistungsschwache Antriebseinheit eingesetzt werden, die lediglich einen geringen Bauraum benötigt. Somit wird eine kompakte und kostengünstige Vorrichtung geschaffen, mit der gleichzeitig eine zuverlässige Funktionsweise des ausklappbaren Monitors gewährleistet ist.

Ein weiterer, wesentlicher Vorteil des erfindungsgemäßen klappbaren Monitors ist, dass die Größe des verwendeten Monitors und somit auch dessen Gewicht für die Antriebseinheit keine Rolle spielt, da das Feder-Hebel-System individuell hinsichtlich des eingesetzten Monitors angepasst ist, so dass in jeder Schwenkposition des Monitors das Schwerkraftmoment durch das aufgrund des Feder-Hebel-Systems wirkende Drehmoment aufgehoben ist. Ferner zeichnet sich die erfindungsgemäße Vorrichtung durch eine geringe Schwenkzeit des Monitors von der Nichtgebrauchslage in die Gebrauchslage und umgekehrt aus.

Vorzugsweise umfasst das Feder-Hebel-System eine Federeinheit und ein Hebelelement, das an der Drehachse angeordnet ist. In einer bevorzugten Ausgestaltung kann die Federeinheit am Hebelelement in einem bestimmten Abstand zur Drehachse angeordnet sein. Dieser Abstand zur Drehachse ist notwendig, damit die wirkende Federkraft der Federeinheit ein entsprechendes Moment erzeugt, welches dem Schwerkraftmoment des Monitors entgegenwirkt. In einer Ausführungsform der Erfindung ist das Hebelelement mit einem Befestigungsmittel ausgebildet, der zum Beispiel ein Bolzen sein kann. Alternative Befestigungsmittel sind selbstverständlich denkbar. Die Federeinheit, die beispielsweise eine Zugfeder sein kann, ist am Befestigungsmittel des Hebelelementes angeordnet.

Bei einer Ausführungsform der erfindungsgemäßen Vorrichtung steht die Federeinheit mit einem ersten Ende mit dem Monitor in Wirkverbindung. Mit einem dem ersten Ende gegenüberliegenden zweiten Ende ist die Federeinheit wirkverbindungsfrei zum Monitor angeordnet. Hierbei kann die Federeinheit mit dem ersten Ende an einem am Monitor angeordneten Haltemittel und mit dem zweiten Ende am Befestigungsmittel des Hebels befestigt sein. Die vorzugsweise als Zugfeder ausgebildete Federeinheit übt mit ihrem ersten Ende eine Kraft direkt auf den Monitor aus, die zum zweiten Ende der Federeinheit gerichtet ist. Während der Schwenkbewegung dreht sich hierbei das erste Ende der Federeinheit mit dem Monitor mit. Das zweite Ende der Federeinheit übt eine Zugkraft auf das Befestigungsmittel sowie auf den Hebel aus. Da der Hebel jedoch in dieser Ausführungsform starr (unbeweglich) - beispielsweise an einer Wandung des Kraftfahrzeugdaches - angeordnet ist, wird die wirkende Zugkraft am zweiten Ende der Federeinheit durch den Hebel vollständig aufgenommen. Das zweite Ende der Federeinheit ist somit wirkverbindungsfrei zum Monitor angeordnet, das bedeutet, dass es an dieser Stelle zu keiner Kräfteübertragung auf den Monitor kommt. Erfindungsgemäß ist die Geometrie des Feder-Hebel-Systems sowie die Federkraft der Federeinheit derart abgestimmt, dass das erste Ende der Federeinheit in jeder Schwenkposition des Monitors ein Moment erzeugt, welches das Schwerkraftmoment im Wesentlichen aufhebt. Während des Scbwenkvorganges verändert das zweite Ende der Federeinheit seine Position nicht.

In einer alternativen Ausführungsform der Erfindung kann die Federeinheit mit dem zweiten Ende an einem kontaktlos zum Monitor ausgeführten Fixierungsmittel und mit dem ersten Ende am Befestigungsmittel des Hebels befestigt sein, der während des Schwenkvorganges des Monitors sich mitdreht. Das Fixierungsmittel kann beispielsweise an der Fahrzeugdachwandung angeordnet sein und in einer Ausführung der Erfindung die Form eines stiftes einnehmen, an den das zweite Ende der Federeinheit eingehängt werden kann. Das erste Ende der Federeinheit übt eine Kraft auf das Befestigungsmittel aus, die über den Hebel auf den Monitor übertragen wird. Diese Wirkverbindung zwischen der Federeinheit und dem Monitor ermöglicht, dass ein Drehmoment durch das Feder-Hebel-System erzeugt werden kann, das in allen Schwenklagen des Monitors das wirkende Schwerkraftmoment aufhebt.

In einer bevorzugten Ausführungsform der Erfindung ist die Antriebseinheit im Monitor, der gemäß einer bevorzugten Ausführungsform ein LCD-Bildschirm ist, integriert. Da das auf den Monitor wirkende Schwerkraftmoment durch das Feder-Hebel-System aufgehoben wird, ist lediglich eine kleine Antriebseinheit, die problemlos in den Monitor eingebaut werden kann, für die Schwenkbewegung des Monitors von der Nichtgebrauchslage in die Gebrauchlage und umgekehrt notwendig. Im Gegensatz dazu ist es bei den im Stand der Technik bekannten klappbaren Monitoren üblich eine Schwenkvorrichtung mit der Antriebseinheit um den Monitor herumzukonstruieren, wodurch nachteiligerweise viel Bauraum benötigt wird. Durch die Integrierung der Antriebseinheit in den Monitor ergibt sich ferner der Vorteil, dass der Monitor bei eventuell auftretenden Defekten ohne großen Montageaufwand einfach und in kurzer Zeit ausgebaut werden kann.

Gemäß einer weiteren vorteilhaften Ausführungsform, ist auch vorgesehen, dass in Nichtgebrauchslage der Monitor (100) in einer Vertiefung eines Kraftfahrzeugdaches aufgenommen ist, so dass zusätzlich Bauraum eingespart wird.

*Kurze Beschreibung der Zeichnungen*

Weitere Vorteile, Merkmale und Einzelheiten der Erfindung ergeben sich aus der nachfolgenden Beschreibung, in der unter Bezugnahme auf die Zeichnungen zwei Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

Fig. 1 eine Seitenansicht eines erfindungsgemäßen ausklappbaren Monitors mit einem Feder-Hebel-System, und

Fig. 2 eine Seitenansicht einer alternativen Ausgestaltung eines ausklappbaren Monitors.

*Bester Weg zur Ausführung der Erfindung*

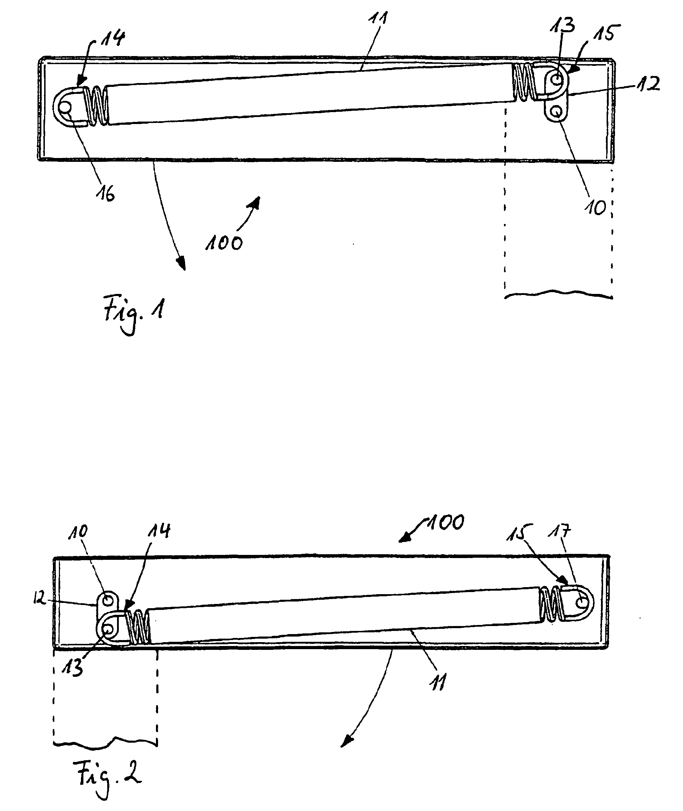

Figur 1 zeigt einen ausklappbaren Monitor 100, der in einem nicht dargestellten Kraftfahrzeug - beispielsweise in einem Bus - angeordnet ist. Der Monitor 100 befindet sich in der gezeigten Darstellung in einer horizontalen Nichtgebrauchslage. In dieser Stellung ist der Monitor 100 vorzugsweise in einer nicht dargestellten Vertiefung des Kraftfahrzeugdaches aufgenommen, wobei die Vertiefung im Wesentlichen der Form des Monitors 100 angepasst ist. Aus dieser versenkten Lage ist der Monitor 100 um eine Drehachse 10 in eine vertikale Gebrauchslage schwenkbar. Die Schwenkrichtung ist durch die Pfeildarstellung in Figur 1 dargestellt. Die vertikale Gebrauchslage ist in Figur 1 sowie in Figur 2 zeichnerisch durch eine gestrichelte Darstellung der Monitorkontur 100 angedeutet. Bei dem Monitor 100 handelt es sich um einen LCD-Bildschirm.

Dem Monitor 100 kann beispielsweise eine nicht dargestellte Bedienungseinrichtung zur Steuerung - beispielsweise zur Programmwahl - zugeordnet sein, die zum Beispiel als Flachbauteil in dem Fahrzeugsitz oder dessen Kopfstütze versenkbar angeordnet werden kann und über eine Kabelverbindung oder über eine drahtlose Verbindung mit dem Monitor 100 in Kontakt ist.

Der schwenkbare Monitor 100 weist des Weiteren ein Feder-Hebel-System 11,12 auf, das im Wesentlichen aus einer Federeinheit 11 und einem Hebelelement 12 besteht. Die Federeinheit 11 ist als Zugfeder ausgebildet. Bei der Federeinheit 11 kann es sich in einer weiteren Ausführungsform beispielsweise auch um eine Gasfeder handeln.

Gemäß Figur 1 steht die Federeinheit 11 mit einem ersten Ende 14 mit dem Monitor 100 in Wirkverbindung. Hierbei weist der Monitor 100 ein Haltemittel 16 in Form eines Stiftes auf, an dem die Federeinheit 11 eingehängt ist. Des Weiteren weist die Federeinheit 11 ein dem ersten Ende 14 gegenüberliegendes zweite Ende 15 auf, welches wirkverbindungsfrei zum Monitor 100 an einem Befestigungsmittel 13 des Hebels 12 angeordnet ist. Das Befestigungsmittel 13 ist als Bolzen ausgebildet, der einstückig mit dem Hebel 12 verbunden ist. Der Hebel 12 besteht im dargestellten Ausführungsbeispiel aus einem metallischen Material und ist fest an einer nicht dargestellten Wandung angeordnet. Der Hebel 12 kann beispielsweise formschlüssig und/oder kraftschlüssig und/oder stoffschlüssig mit der Wandung verbunden sein. In einem bestimmten Abstand zum Bolzen 13 weist der Hebel 12 eine Öffnung auf, in der eine als Drehachse 10 für den Monitor 100 ausgebildete Welle drehbar gelagert ist.

Die Federeinheit 11 übt am Befestigungsmittel 13 und am Haltemittel 16 jeweils eine bestimmte Zugkraft aus. Da das zweite Ende 15 der Federeinheit 11 wirkverbindungsfrei zum Monitor 100 angeordnet ist, entsteht lediglich ausgehend vom ersten Ende 14 der Federeinheit 11 eine Kraftübertragung auf den Monitor 100. Diese auf den Monitor 100 wirkende Kraft bewirkt ein Drehmoment, welches das aufgrund der Monitormasse beruhende Schwerkraftmoment ausgleicht. Hierbei ist das durch die Federeinheit 11 auf den Monitor 100 wirkende Moment im Uhrzeigersinn und das Schwerkraftmoment gegen den Uhrzeigersinn gerichtet.

Das Feder-Hebel-System 11,12 ist derart ausgebildet, dass es in jeder Lage des Monitors 100 das Schwerkraftmoment nahezu aufhebt. In Nichtgebrauchslage wirken auf den Monitor 100 das größte Feder- und das größte Schwerkraftmoment, Während des Schwenkvorganges des Monitors 100 nehmen die genannten Momente stetig ab bis in Gebrauchslage des Monitors 100 das Feder- und das Schwerkraftmoment nahezu null sind. Während des Schwenkvorganges des Monitors 100 dreht sich das erste Ende 14 der Federeinheit 11 mit um die Drehachse 10, wobei das zweite Ende 15 unbeweglich mit dem Hebelelement 12 in seiner Position verbleibt.

Der wesentliche Vorteil dieser Erfindung ist, dass für die Bewegung des Monitors 100 eine leistungsschwache Antriebseinheit verwendet werden kann. Diese Antriebseinheit kann möglichst klein ausgestaltet sein und ist vorteilhafterweise im Monitor integriert.

Gemäß Figur 2 wird eine weitere Alternative der Erfindung dargestellt. Der ausklappbare Monitor 100 weist im Wesentlichen die Merkmale des in Figur 1 dargestellten Monitors 100 auf, so dass im folgenden schwerpunktmäßig auf die Unterschiede eingegangen wird.

Die Federeinheit 11 ist mit dem ersten Ende 14 am Befestigungsmittel 13 des Hebels 12 befestigt. Das zweite Ende 15 der Federeinheit 11 ist kontaktfrei zum Monitor 100 an einem Fixierungsmittel 17 angeordnet. Das Fixierungsmittel 17 kann beispielsweise fest an einer Wandung des Kraftfahrzeugdaches angeordnet sein. Wie im Ausführungsbeispiel gemäß Figur 1 übt die Federeinheit 11 an ihren beiden Enden 14,15 eine Zugkraft aus. Da das Fixierungsmittel 17 nicht in Verbindung mit dem Monitor 100 steht (wirkverbindungsfrei), wird an dieser Stelle kein Drehmoment auf den ausklappbaren Monitor 100 übertragen.

In einem Abstand zum Befestigungsmittel 13 ist eine als Drehachse 10 ausgebildete Welle in einer Öffnung des Hebels 12 drehbar gelagert. Der Monitor 100 ist mit der Welle verbunden und kann um die Drehachse 10 von der Nichtgebrauchslage in die Gebrauchslage verschwenkt werden, welches durch die Pfeildarstellung verdeutlicht ist. Das Befestigungsmittel 13 sowie der Hebel 12 stehen in Wirkverbindung mit dem Monitor 100, so dass die auf das Befestigungsmittel 13 wirkende Zugkraft des ersten Endes 14 der Federeinheit 11 ein Federdrehmoment auf den Monitor 100 ausübt, welches in jeder Lage des Monitors 100 das Schwerkraftmoment aufhebt. Im dargestellten Ausführungsbeispiel wirkt das Schwerkraftmoment im Uhrzeigersinn und das Federmoment gegen den Uhrzeigersinn.

Vorteilhaft ist, dass bei beiden dargestellten Ausführungsformen der Schwenkvorgang des Monitors 100 auch ohne Antriebseinheit manuell realisiert werden kann. Da sich das Schwerkraftmoment und das Federmoment in jeder Lage nahezu aufheben, ist lediglich eine geringe Kraft notwendig, um manuell ein Schwenken des Monitors 100 um die Drehachse 10 ausführen zu können, so dass sich vorteilhafter Weise eine Ausführungsform ergibt, bei der der Monitor (100) manuell auch ohne Antriebseinheit von der Nichtgebrauchslage in die Gebrauchlage und umgekehrt schwenkbar ist.

In einer weiteren Ausgestaltung der Erfindung ist es denkbar, eine Arretiervorrichtung am Monitor 100 anzuordnen, die den Monitor 100 zumindest in der Nichtgebrauchslage zuverlässig hält. Obwohl bereits das Feder-Hebel-System 11,12 dafür sorgt, dass der Monitor 100 in der Nichtgebrauchslage sicher gehalten wird, stellt die Arretiervorrichtung ein zusätzliches Sicherungselement dar.

Die Inbetriebsetzung des Schwenkvorganges kann auf unterschiedliche Art und Weise erfolgen. Beispielsweise kann durch manuelle Betätigung eines Tastelementes die Antriebseinheit aktiviert werden, die den Monitor 100 aus der Nichtgebrauchslage in die Gebrauchslage auslenkt oder umgekehrt.

Gemäß einer besonders vorteilhaften Ausgestaltung beider Ausführungsformen ist zur Realisierung eines besonders kleinen und wenig Leistung erfordernden Antriebes vorgesehen, dass die Schwenkung aus der jeweiligen Lage über entsprechende leichtgängige Achsen so erfolgt und das Feder-Hebel-System so ausgelegt ist, dass das Feder-Hebel-System ein Moment auf den Monitor ausübt, das in jeder Lage des Monitors entgegengesetzt dem aufgrund der Masse des Monitors wirkenden Schwerkraftmoment entspricht.

Die Erfindung umfasst nicht nur die ordnungsgemäße Ausgestaltung des Monitors, sondern auch ein Kraftfahrzeug mit einem erfindungsgemäßen Monitor mit einer voranstehend beschriebenen Ausgestaltung

## Patentansprüche

**1.** Ausklappbarer Monitor (100), insbesondere für ein Kraftfahrzeug, mit einer Antriebseinheit, mit der der Monitor (100) um eine Drehachse (10) aus einer im Wesentlichen horizontalen Nichtgebrauchslage in eine im Wesentlichen vertikale Gebrauchlage und umgekehrt schwenkbar ist,
**gekennzeichnet durch**
ein Feder-Hebel-System (11,12), das im Wesentlichen ein Moment auf den Monitor (100) ausübt, das in jeder Lage des Monitors (100) dem aufgrund der Masse des Monitors (100) wirkenden Schwerkraftmoment nahezu entspricht und entgegengesetzt zu diesem Schwerkraftmoment wirkt.

**2.** Ausklappbarer Monitor (100) nach Anspruch 1,
**dadurch gekennzeichnet,**
**dass** das Feder-Hebel-System (11,12) eine Federeinheit (11) und ein Hebelelement (12) umfasst, das an der Drehachse (10) angeordnet ist.

**3.** Ausklappbarer Monitor (100) nach Anspruch 1 oder 2,
**dadurch gekennzeichnet,**
**dass** die Federeinheit (11) am Hebelelement (12) in einem Abstand zur Drehachse (10) angeordnet ist.

**4.** Ausklappbarer Monitor (100) nach einem der genannten Ansprüche,

**dadurch gekennzeichnet,**
**dass** die Federeinheit (11) mit einem am Hebelelement (12) ausgebildeten Befestigungsmittel (13) verbunden ist

**5.** Ausklappbarer Monitor (100) nach Anspruch 4,
**dadurch gekennzeichnet,**
**dass** das Befestigungsmittel (13) ein Bolzen ist.

**6.** Ausklappbarer Monitor (100) nach einem der genannten Ansprüche,
**dadurch gekennzeichnet,**
**dass** die Federeinheit (11) als Zugfeder ausgebildet ist.

**7.** Ausklappbarer Monitor (100) nach einem der genannten Ansprüche,
**dadurch gekennzeichnet,**
**dass** die Federeinheit (11) eine Gasfeder ist.

**8.** Ausklappbarer Monitor (100) nach einem der genannten Ansprüche,
**dadurch gekennzeichnet,**
**dass** die Federeinheit (11) mit einem ersten Ende (14) mit dem Monitor (100) in Wirkverbindung steht und mit einem dem ersten Ende (14) gegenüberliegenden zweiten Ende (15) wirkverbindungsfrei zum Monitor (100) angeordnet ist.

**9.** Ausklappbarer Monitor (100) nach Anspruch 8,
**dadurch gekennzeichnet,**
**dass** die Federeinheit (11) mit dem ersten Ende (14) an einem am Monitor (100) angeordneten Haltemittel (16) und mit dem zweiten Ende (15) am Befestigungsmittel (13) des Hebels (12) befestigt ist, der unbeweglich während des Schwenkvorganges des Monitors (100) in seiner Position verbleibt.

**10.** Ausklappbarer Monitor (100) nach einem der genannten Ansprüche
**dadurch gekennzeichnet,**
**dass** die Federeinheit (11) mit dem zweiten Ende (15) an einem kontaktlos zum Monitor (100) Ausgeführten Fixierungsmittel (17) und mit dem ersten Ende (14) am Befestigungsmittel (13) des Hebels (12) befestigt ist, der während des Schwenkvorganges des Monitors (100) sich mitdreht.

**11.** Kraftfahrzeug mit einem ausklappbaren Monitor (100) nach einem der genannten Ansprüche.

## Claims

**1.** Foldable monitor (100), in particular for a motor vehicle, with a drive unit with which the monitor (100) can be pivoted about an axis of rotation (10) from an essentially horizontal not-in-use position into an essentially vertical use position, and vice versa, **characterized by** a spring-lever system (11, 12) which essentially exerts a moment on the monitor (100), which moment, in every position of the monitor (100), virtually corresponds to the gravitational moment which acts on account of the mass of the monitor (100), the moment acting in the opposite direction to said gravitational moment.

2. Foldable monitor (100) according to Claim 1, **characterized in that** the spring-lever system (11, 12) comprises a spring unit (11) and a lever element (12) which is arranged on the axis of rotation (10).

3. Foldable monitor (100) according to Claim 1 or 2, **characterized in that** the spring unit (11) is arranged on the lever element (12) at a distance from the axis of rotation (10).

4. Foldable monitor (100) according to one of the abovementioned claims, **characterized in that** the spring unit (11) is connected to a fastening means (13) formed on the lever element (12).

5. Foldable monitor (100) according to Claim 4, **characterized in that** the fastening means (13) is a bolt.

6. Foldable monitor (100) according to one of the abovementioned claims, **characterized in that** the spring unit (11) is designed as a tension spring.

7. Foldable monitor (100) according to one of the abovementioned claims, **characterized in that** the spring unit (11) is a gas-filled spring.

8. Foldable monitor (100) according to one of the abovementioned claims, **characterized in that** the spring unit (11) is operatively connected at a first end (14) to the monitor (100) and, at a second end (15) lying opposite the first end (14), is arranged in a manner free from an operative connection to the monitor (100).

9. Foldable monitor (100) according to Claim 8, **characterized in that** the spring unit (11) is fastened at the first end (14) to a retaining means (16) arranged on the monitor (100) and at the second end (15) to the fastening means (13) of the lever (12) which remains moveably in its position during the pivoting operation of the monitor (100).

10. Foldable monitor (100) according to one of the abovementioned claims, **characterized in that** the spring unit (11) is fastened at the second end (15) to a fixing means (17), which is designed such that it does not make contact with the monitor (100), and at the first end (14) to the fastening means (13) of the lever (12) which concomitantly rotates during the pivoting operation of the monitor (100).

11. Motor vehicle with a foldable monitor (100) according to one of the abovementioned claims.

## Revendications

1. Ecran pliant (100) notamment pour un véhicule automobile comportant une unité d'entraînement qui permet de pivoter l'écran (100) autour d'un axe de rotation (10) à partir d'une position de rangement pratiquement horizontale dans une position d'utilisation pratiquement verticale et inversement,
**caractérisé par**
un système ressort-levier (11, 12) qui exerce pratiquement un couple sur l'écran (100) qui correspond pour toute position de l'écran (100) au couple de la gravité résultant de la masse de l'écran (100) et agit contre ce couple exercé par la gravité.

2. Ecran pliant (100) selon la revendication 1,
**caractérisé en ce que**
le système ressort-levier (11, 12) comporte une unité à ressort (11) et un élément de levier (12) installés sur l'axe de rotation (10).

3. Ecran pliant (100) selon la revendication 1 ou 2,
**caractérisé en ce que**
l'unité de ressort (1) comporte un élément de levier (12) écarté de son axe de rotation (10).

4. Ecran pliant (100) selon l'une des revendications précédentes,
**caractérisé en ce que**
l'unité de ressort (11) est reliée à un moyen de fixation (13) réalisé sur l'élément de levier (12).

5. Ecran pliant (100) selon la revendication 4,
**caractérisé en ce que**
le moyen de fixation (13) est un goujon.

6. Ecran pliant (100) selon l'une des revendications précédentes,
**caractérisé en ce que**
l'unité de ressort (11) est un ressort de traction.

7. Ecran pliant (100) selon l'une des revendications précédentes,
**caractérisé en ce que**
l'unité de ressort (11) est un ressort à gaz.

8. Ecran pliant (100) selon l'une des revendications précédentes,
**caractérisé en ce que**
l'unité de ressort (11) coopère par une première extrémité (14) avec l'écran (11) et par une seconde extrémité (15) à l'opposé de la première extrémité (14) avec l'écran (12).

9. Ecran pliant (100) selon la revendication 8, **caractérisé en ce que** l'unité de ressort (11) est fixée par une première extrémité (14) à un moyen de fixation (16) prévu sur l'écran (100) et par une seconde extrémité (15) à un moyen de fixation (13) du levier (12), qui reste fixe pendant le pivotement de l'écran (100) dans sa position.

10. Ecran (100) selon l'une des revendications précédentes, **caractérisé en ce que** l'unité de ressort (11) est fixée par une première extrémité (15) à un moyen de fixation (17) sans contact avec l'écran (100) et avec la seconde extrémité (14) au moyen de fixation (13) du levier (12) qui tourne également pendant le pivotement de l'écran (100).

11. Véhicule automobile équipé d'un écran pliant (100) selon l'une des revendications précédentes.

EP 1 598 240 B1

Fig. 1

Fig. 2

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4309151 A1
- US 20040075639 A1